# EUROPÄISCHE PATENTSCHRIFT

(11) **EP 1 897 734 B1**
(45) Veröffentlichungstag und Bekanntmachung des Hinweises auf die Patenterteilung: **02.01.2013**
(21) Anmeldenummer: 07015441.4
(22) Anmeldetag: 07.08.2007
(51) Int. Cl.: B60J 7/14

(54) **Cabriolet**
Convertible
Cabriolet

(30) Priorität: 08.09.2006 DE 102006042262
(43) Veröffentlichungstag der Anmeldung: 12.03.2008
(73) Patentinhaber: Dr. Ing. h.c. F. Porsche AG, 70435 Stuttgart (DE)
(72) Erfinder: Beierl, Dominik, 70825 Korntal-Münchingen (DE); Schulz, Lars, 15566 Schöneiche (DE); Hermann, Felix, 71229 Leonberg (DE); Franz, Kristian, 70376 Stuttgart (DE)

(56) Entgegenhaltungen:
- EP-A1- 1 092 579
- EP-A1- 1 398 195
- EP-A2- 1 555 152
- DE-A1- 10 107 077
- DE-A1- 10 150 218
- US-A1- 2004 207 232

## Beschreibung

Die vorliegende Erfindung betrifft ein Cabriolet mit einem zu Verdeck, das einen Heckscheibenrahmen und bei geschlossenem Verdeck zumindest einen in Fahrtrichtung davor gelegenen Flächenspriegel aufweist gemäß dem Oberbegriff des Anspruchs 1. Ein solches Cabriolet ist aus der DE 101 50 218 A1 bekannt.

Ein zu öffnendes Verdeck für ein Cabriolet ist beispielsweise aus der DE 100 57 872 A1 bekannt, wobei das Verdeck zwischen einer den Fahrzeuginnenraum überdeckenden Schließposition und einer Ablageposition verstellbar ist und ein vorderes und ein hinteres Dachteil aufweist. Zwischen den vorderen und dem hinteren Dachteil ist ein Kopplungsgestänge zur Durchführung einer Relativbewegung des vorderen Dachteils angeordnet: Das Kopplungsgestänge ist dabei so ausgebildet, dass zu Beginn des Öffnens des Verdecks das vordere Dachteil relativ zum hinteren Dachteil nach unten aus einer Dachkontur herausfahrbar ist. Das Kopplungsgestänge umfasst ein Viergelenk mit zwei Lenkern und einem die beiden Lenker verbindenden Schubglied, welches an einer am hinteren Dachteil angeordneten Führungsschiene verschiebbar gehalten ist. Dies soll bewirken, dass das Kopplungsgestänge lediglich eine einzige, definierte, zwangsgesteuerte Bewegung ausführen kann, wodurch ein präzises Öffnen und Schließen des Verdecks gewährleistet werden soll. Dabei handelt es sich ausdrücklich um ein Hardtop-Fahrzeugdach.

Aus der DE 102 58 330 A1 ist ein versenkbares Fahrzeugdach mit zwei starren, im geschlossenen Zustand hintereinander angeordneten Dachelementen bekannt. Das vordere Dachelement kann über ein an dessen Seiten angreifende, als Doppelschwinge ausgebildete, antreibbare Lenkergetriebe nach hinten in eine im Kofferraum versenkte Ablagestellung bewegt werden. Demgegenüber ist das hintere Dachelement über jeweils einen, mit dem Lenkergetriebe verbundenen Verbindungslenker mit dem vorderen Dachelement gekoppelt und über eine Schiebeführung an diesem derart geführt, dass das hintere Dachelement bei der Verstellung des vorderen Dachelements zunächst in eine dieses überlappende Stellung gelangt und so dann in die Ablagestellung mitgenommen wird.

Weitere hardtopartige Klappverdecke sind beispielsweise aus der DE 101 19 069 A1 und aus der US 6,957,843 B2 bekannt.

Die vorliegende Erfindung beschäftigt sich mit dem Problem, für ein Cabriolet der gattungsgemäßen Art eine verbesserte oder zumindest eine andere Ausführungsform anzugeben, welche ein möglichst platzsparendes Ablegen des Verdecks sowie ein zuverlässiges und präzises Öffnen und Schließen desselben ermöglicht.

Erfindungsgemäß wird dieses Problem durch den Gegenstand des unabhängigen Anspruchs gelöst. Vorteilhafte Ausführungsform sind Gegenstand der abhängigen Ansprüche.

Die Erfindung beruht auf allgemeinen Gedanken, bei einem aus mehreren Dachabschnitten, nämlich einem Heckscheibenrahmen sowie einem davor bei geschlossenem Verdeck angeordneten ersten und zweiten Flächenspriegel bestehende Verdeck ein Kopplungsgestänge vorzusehen, welches beim Öffnen des Verdecks zunächst den zweiten Flächenspriegel relativ zum davor gelegenen ersten Flächenspriegel und relativ zum dahinter gelegenen Heckscheibenrahmen nach unten aus einer Dachkontur herausfährt und dadurch eine Ablage des zweiten Flächenspriegels bei geöffnetem Verdeck unterhalb des Heckscheibenrahmens erlaubt, während der erste Flächenspriegel bei geöffnetem Verdeck oberhalb des Heckscheibenrahmens abgelegt ist. Das im wesentlichen orthogonal zur Dachkontur bzw. einer Dachebene Herausfahren des zweiten Flächenspriegels zu Beginn des Öffnungsvorgangs ermöglicht eine sich daran anschließende problemlose Öffnungsbewegung des ersten Flächenspriegels, welcher zunächst den zuvor vom zweiten Flächenspriegel eingenommenen und nunmehr freien Bauraum durchdringen kann. Erst durch die Ausfahrbewegung des zweiten Flächenspriegels aus der Dachkontur zu Beginn des Öffnungsvorgangs kann das aus dem Heckscheibenrahmen, und zumindest zwei Flächenspriegel bestehende Verdeck bauraumminimierend abgelegt werden. Erfindungsgemäß ist zur passiven Relativbewegung des zweiten Flächenspriegels bezüglich des Heckscheibenrahmens und des ersten Flächenspriegels ein hinterer Lenker eines Viergelenks mit einem am zweiten Flächenspriegel angeordneten Gelenk in einer am Heckscheibenrahmen angeordnete Zwangsführung verstellbar geführt. Diese Ausführungsform erübrigt das Anbringen einer separaten Verstelleinrichtung, welche die Relativbewegung des zweiten Flächenspriegels bezüglich des ersten Flächenspriegels und des Heckscheibenrahmens bewirkt. Durch den Wegfall einer derartigen Verstelleinrichtung kann das Verdeck konstruktiv besonders einfach ausführt und zu dem kostengünstig realisiert werden. Insbesondere kann auch eine separate Energieversorgung für eine derartige Verstelleinrichtung entfallen, wodurch ein Montageaufwand für zusätzliche Versorgungsleitungen vermieden wird. Die Zwangsführung des hinteren Lenkers des Viergelenks mit seinem am zweiten Flächenspriegel angeordneten Gelenk gewährleistet zudem eine zuverlässige und präzise Öffnungs- bzw. Schließbewegung des Verdecks, wodurch sich ein besonders qualitativ hochwertiges Verdeck herstellen lässt.

Im Unterschied zu herkömmlichen Verdecken kann somit der zweite Flächenspriegel unterhalb des Heckscheibenrahmens abgelegt werden, während der erste Flächenspriegel bzw. gegebenenfalls weitere Dachabschnitte oberhalb des Heckscheibenrahmens abgelegt werden können, wodurch sich diese besonders platzsparend stapeln lassen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

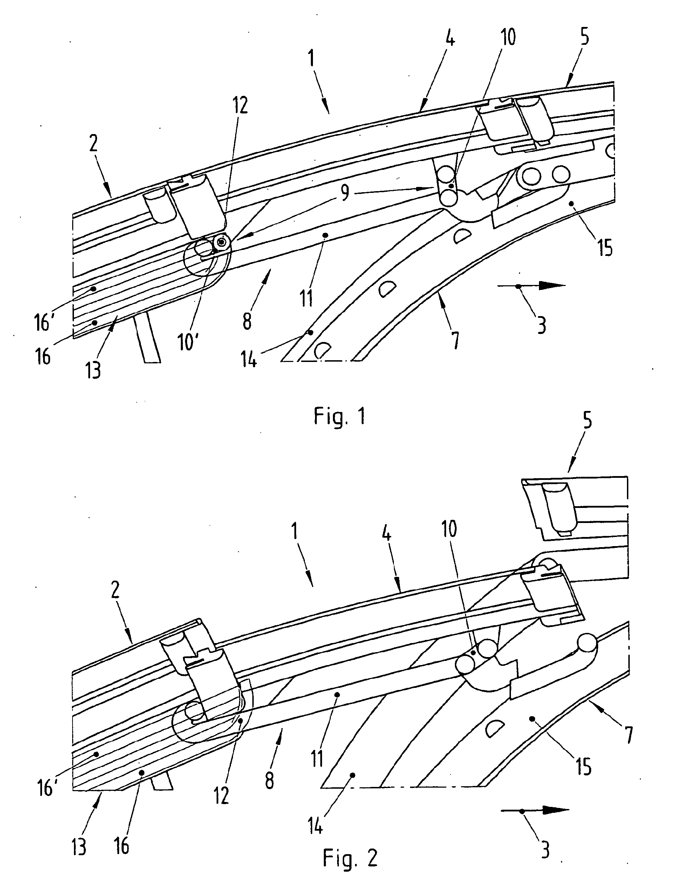

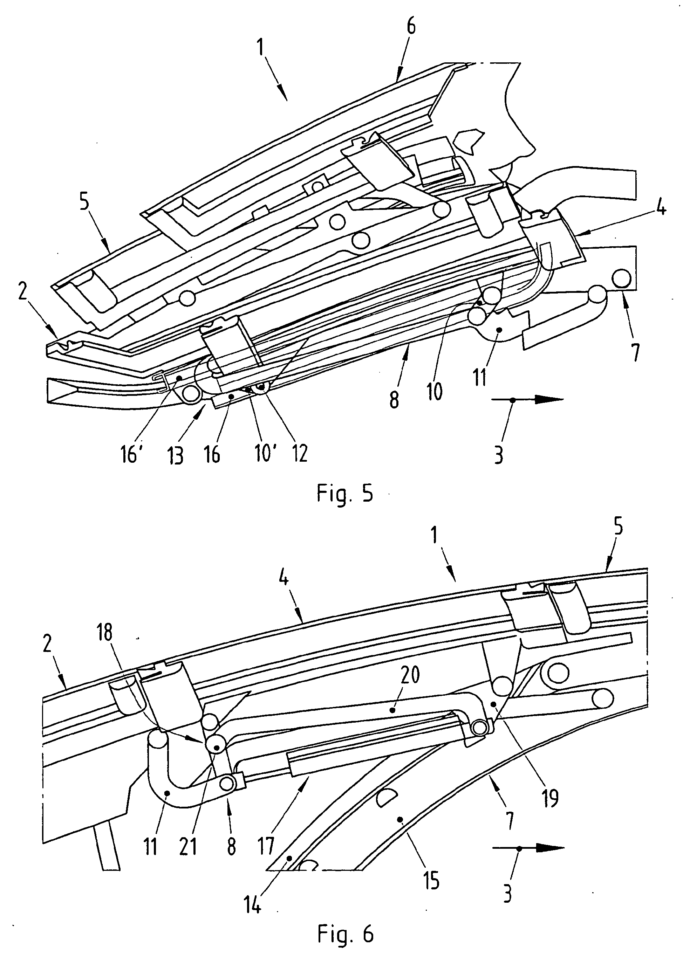

Ein Ausführungsbeispiel der Erfindung ist in den Fig. 1 bis 5 dargestellt und wird in der nachfolgenden Beschreibung näher erläutert, wobei sich gleiche Bezugszeichen auf gleiche oder ähnliche oder funktional gleiche Bauteile beziehen. Das in den Fig. 6 - 8 dargestellte Verdeck ist nicht von dem Patentanspruch 1 umfasst.

Dabei zeigen, jeweils schematisch,
- Fig. 1: ein erfindungsgemäßes Verdeck in geschlossenem Zustand,
- Fig. 2: eine Darstellung wie in Fig. 1, jedoch bei leicht geöffnetem Zustand,
- Fig. 3: eine Darstellung wie in Fig. 1, jedoch aus einer anderen Perspektive,
- Fig. 4: eine Darstellung wie in Fig. 2, jedoch aus einer anderen Perspektive,
- Fig. 5: ein abgelegtes erfindungsgemäßes Verdeck in vollständig geöffnetem Zustand,
- Fig. 6: ein Verdeck in geschlossenem Zustand mit einer an einem Kopplungsgestänge angeordneten aktiven Verstelleinrichtung,
- Fig. 7: eine Darstellung wie in Fig. 2, jedoch mit der aktiven Verstelleinrichtung,
- Fig. 8: eine Darstellung wie in Fig. 5, jedoch mit der aktiven Verstelleinrichtung.

Gemäß Fig. 1 ist ein Verdeck 1 eines im Übrigen nicht dargestellten Cabriolets gezeigt, welches zwischen einer Öffnungs- und einer Schließstellung in bekannter Weise verstellbar ist. Fig. 1 zeigt dabei die geschlossene Stellung des Verdecks 1, in welcher dieses einen Fahrgastraum des Cabriolets überdeckt und gegenüber äußeren Witterungseinflüssen abschirmt.

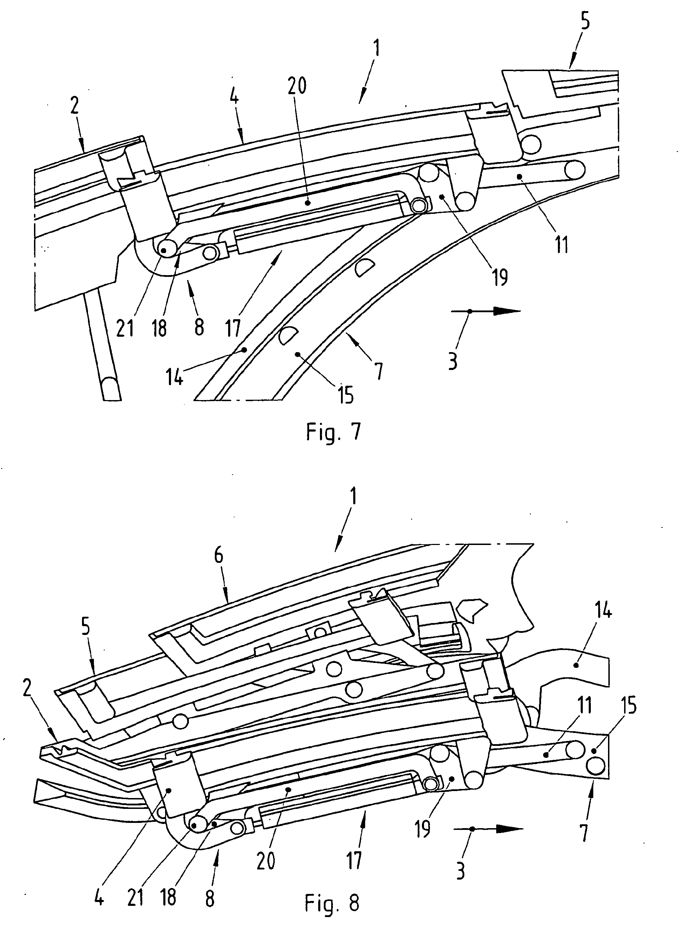

Das erfindungsgemäße Verdeck 1 weist einen Heckscheibenrahmen 2 mit einer daran angeordneten, nicht näher bezeichneten Heckscheibe, sowie bei geschlossenem Verdeck 1 zumindest einen in Fahrtrichtung 3 davor gelegenen Flächenspriegel 4, der im folgenden als zweiter Flächenspriegel 4 bezeichnet wird, auf. In Fahrtrichtung 3 vor dem zweiten Flächenspriegel 4 ist ein erster Flächenspriegel 5 angeordnet und davor ein Integraldachrahmen 6 (vgl. Fig. 5 und 8). Das erfindungsgemäße Verdeck 1 besteht somit aus insgesamt vier Dachabschnitten 2, 4, 5 und 6, welche bei geschlossenem Verdeck 1 eine durchgehende Dachkontur bilden und welche bei geöffnetem Verdeck 1 in einem rückwärtigen Bereich des Cabriolets über einander gestapelt ablegbar sind. Bei abgelegtem, d.h. geöffnetem Verdeck 1, ist der zweite Flächenspriegel 4, wie aus den Fig. 5 und 8 ersichtlich, unter dem Heckscheibenrahmen 2 abgelegt, während der erste Flächenspriegel 5 und der Integraldachrahmen 6 über dem Heckscheibenrahmen 2 abgelegt sind. Zum Verstellen des Verdecks 1 zwischen seiner Schließstellung und seiner Öffnungsstellung ist ein Antriebsgestänge 7 vorgesehen, welches entweder direkt oder indirekt mit den einzelnen Dachabschnitten 2, 4, 5 und 6 gekoppelt ist.

Um das der Verdeck 1 in der oben beschriebenen Weise ablegen zu können, ist es erforderlich, dass zu Beginn der Öffnungsbewegung des Verdecks 1 der zweite Flächenspriegel 4 relativ zum Heckscheibenrahmen 2 und relativ zum benachbarten ersten Flächenspriegel 5 nach unten aus der Dachkontur herausfahrbar ist. Diese Ausfahrbewegung beim Öffnen des Verdecks 1 bzw. eine Einfahrbewegung beim Schließen des Verdecks 1 wird dabei von einem Kopplungsgestänge 8 bewirkt, das zwischen dem Heckscheibenrahmen 2 und dem zweiten Flächenspriegel 4 angeordnet ist. Dabei umfasst das Kopplungsgestänge 8 ein Viergelenk 9 mit zwei jeweils am zweiten Flächenspriegel 4 gelagerten Lenkern 10, 10' und ein, die beiden Lenker 10, 10' verbindendes Kopplungsglied 11. Der Lenker 10', also der in Fahrtrichtung 3 gesehen hintere Lenker des Viergelenks 9 ist dabei einenends am zweiten Flächenspriegel 4 und anderenends am Kopplungsglied 11 gelenkig gelagert, was gleichermaßen auch für den vorderen Lenker 10 des Viergelenks 9 gilt. In Fahrtrichtung 3 vor der gelenkigen Anbindung des Kopplungsglieds 11 an den Lenker 10 ist das Kopplungsglied 11 zusätzlich am Antriebsgestänge 7 gelenkig gelagert. Um die oben beschriebene Verstellbewegung des zweiten Flächenspriegels 4 aus der Dachebene heraus beim Öffnen des Verdecks 1 bewirken zu können, ist der hintere Lenker 10' des Viergelenks 9 mit dem am zweiten Flächenspriegel 4 angeordneten Gelenk 12 zusätzlich in einer am Heckscheibenrahmen 2 angeordneten Zwangsführung 13 verstellbar geführt. Die Zwangsführung 13 kann dabei in der Art einer Schiene oder Kulissenführung ausgebildet sein.

Fig. 1 zeigt das erfindungsgemäße Verdeck 1 in geschlossenem Zustand, in welchem alle Dachabschnitte 2, 4, 5 und 6 so zueinander angeordnet sind, dass sie oben erwähnte durchgehende Dachkontur bilden. Fig. 1 bildet demnach den Ausgangszustand für eine Öffnungsbewegung des Verdecks 1, welche im Weiteren anhand der Fig. 2, 4 und 5 beschrieben wird.

Fig. 2 zeigt einen Zustand kurz nach Beginn der Öffnungsbewegung des Verdecks 1, wobei das nach unten aus der Dachkontur Herausfahren des zweiten Flächenspriegels 4 vom Antriebsgestänge 7 initiiert und von der Zwangsführung 13 verbunden mit dem Viergelenk 9 bewirkt wird. In Fig. 2 hat sich ein hinterer Arm 14 des Antriebsgestänges 7 bereits leicht von einem vorderen Arm 15 des Antriebsgestänges 7 entfernt und bewirkt dadurch ein Umklappen des Viergelenks 9, wodurch sich einerseits der vordere Lenker 10 des Viergelenks 9 verdreht und gleichzeitig das Gelenk 12, welches am zweiten Flächenspriegel 4 angeordnet ist, entlang der Zwangsführung 13 nach unten verstellt wird. Das Viergelenk 9 bewirkt somit zusammen mit der Zwangsführung 13 eine passive Zwangsverstellung des zweiten Flächenspriegels 4 zu Beginn der Öffnungsbewegung aus der Dachebene bzw. der Dachkontur heraus. Ebenso wie der vordere Lenker 10 wird zu Beginn der Öffnungsbewegung auch der hintere Lenker 10' verdreht und zwar um das Gelenk 12, wobei das Kopplungsglied 11 die Verstellbewegung vom vorderen Arm 15 des Antriebsgestänges 7 auf das Viergelenk 9, d.h. auf den vorderen Lenker 10 und den hinteren Lenker 10' des Viergelenks 9 überträgt. An seinem hinteren Ende weist das Kopplungsglied 11 einen J-förmigen Bogen auf.

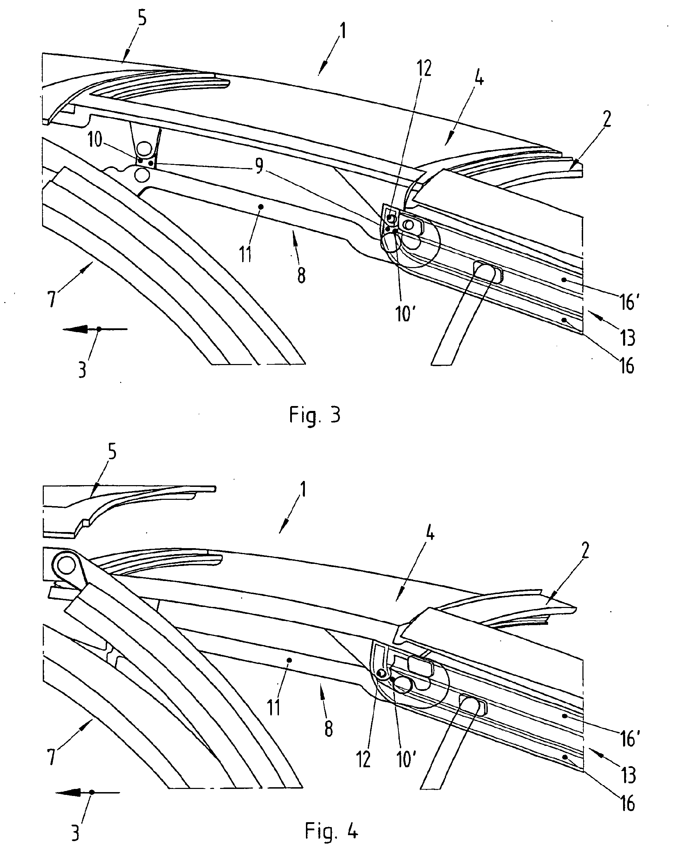

Die Fig. 3 und 4 zeigen das Verdeck 1 in vergleichbaren Zuständen wie in den Fig. 1 und 2 dargestellt, jedoch aus einer anderen Perspektive, im wesentlichen aus einem Innenraum des Cabriolets heraus. Auch hier wird deutlich, dass zu Beginn der Öffnungsbewegung der zweiten Flächenspriegel 4 zunächst aus der vormals geschlossenen und durchgehenden Dachkontur nach unten herausfährt, während sich gleichzeitig der erste Flächenspriegel 5 nach oben bezüglich der Dachkontur und bezüglich des zweiten Flächenspriegels 4 verstellt. Diese im wesentlichen entgegengesetzte Verstellbewegung wird dabei durch das Antriebsgestänge 7 und dem damit wirkungsverbundenen Kopplungsgestänge 8 bewirkt. Prinzipiell weist die Zwangsführung 13 zwei unterschiedliche Führungsbahnen 16, 16' auf wobei das Gelenk 12 bei der Öffnung bzw. Schließbewegung des Verdecks 1 in der Führungsbahn 16 geführt ist und das Kopplungsglied 11 mit seinem J-förmig gebogenen Ende in der Führungsbahn 16'. Durch das Viergelenk 9 verbunden mit der Zwangsführung 13 kann somit eine passive Relativbewegung des zweiten Flächenspriegels 4 bezüglich des Heckscheibenrahmens 2 und des ersten Flächenspriegels 5 erzwungen werden.

Fig. 5 zeigt das erfindungsgemäße Verdeck 1 in vollständig geöffnetem, d.h. abgelegtem Zustand, in welchem der Integraldachrahmen 6 über dem ersten Flächenspriegel 5 und über dem Heckschreibenrahmen 2 bzw. über dem zweiten Flächenspriegel 4 angeordnet ist. Erfindungsgemäß ist dabei der zweite Flächenspriegel 4 unterhalb des Heckscheibenrahmens 2 angeordnet, wodurch ein besonders großer Package-Effekt und damit ein platzsparendes Stapeln des Verdecks 1 in abgelegtem Zustand möglich ist.

Bei einer gemäß den Fig. 6 bis 8 dargestellten Ausführungsform weist das Kopplungsgestänge 8 zur aktiven Relativbewegung des zweiten Flächenspriegels 4 bezüglich des Heckscheibenrahmens 2 und des ersten Flächenspriegels 5 eine Verstelleinrichtung 17 auf, welche hier exemplarisch als Kolben-Zylinder-Aggregat ausgebildet ist. Denkbar sind ausdrücklich auch andere Verstelleinrichtungen 17, die eine Linearverstellung bewirken. Die Verstelleinrichtung 17 ist dabei an einem hinteren Ende gelenkig am Kopplungsglied 11 und gleichzeitig gelenkig an einem Dreigelenkstab 18 gelagert, während es an seinem vorderen Ende an einer Gelenkplatte 19 und gleichzeitig gelenkig an einem Verbindungsglied 20 gelagert ist. Der Dreigelenkstab 18 ist einenends drehbar an einem hinteren Ende des zweiten Flächenspriegels 4 und anderenends drehbar am Kopplungsglied 11 gelagert. Zwischen seinen jeweiligen endseitigen Lagerungen, weist der Dreigelenkstab 18 ein Kniegelenk 21 auf, in welchem gleichzeitig das Verbindungsglied 20 gelenkig mit dem Dreigelenkstab 18 verbunden ist. Anderenends ist das Verbindungsglied 20 wie oben erwähnt gelenkig an der Gelenkplatte 19 gelagert, welche ihrerseits gelenkig an einem vorderen Ende des zweiten Flächenspriegels 4 angeordnet ist. An einem dritten Gelenkpunkt der Gelenkplatte 19 ist diese gelenkig mit dem Kopplungsglied 11 verbunden. Somit sind das Verbindungsglied 20 und die Verstelleinrichtung 17 an einem gemeinsamen Gelenkpunkt gelenkig mit der Gelenkplatte 19 verbunden, während die Verstelleinrichtung 17 und der Dreigelenkstab 18 an einem gemeinsamen Punkt gelenkig mit dem Kopplungsglied 11 verbunden sind.

Fig. 6 zeigt dabei wiederum das Verdeck 1 in geschlossenem Zustand, in welchem die jeweiligen Dachabschnitte 2, 4, 5 und 6 einen durchgehende Dachkontur bilden. Zu Beginn der Öffnungsbewegung wird nun die Verstelleinrichtung 17 betätigt, woraufhin sich diese verkürzt und gleichzeitig einerseits ein Einknicken des Dreigelenkstabs 18 im Kniegelenk 21 bewirkt und andererseits ein Verdrehen der Gelenkplatte 19. Somit wird der Dreigelenkstab 18 aus seiner in Fig. 6 bei geschlossenem Verdeck 1 eingenommenen Streck- bzw. Totpunktlage in eine Knicklage überführt. Das sich Verkürzen der Verstelleinrichtung 17 bewirkt dabei gemäß Fig. 7 das Abknicken des Dreigelenkstabs 18 im Kniegelenk 21 und das Verdrehen der Gelenkplatte 19 und damit ein nach unten herausfahren des zweiten Flächenspriegels 4 aus der zu Beginn durchgehenden Dachkontur. Im Unterschied zur passiven Verstellmöglichkeit gemäß den in den Fig. 1 bis 5 dargestellten Ausführungsformen, erfolgt hierbei zunächst lediglich eine Relativbewegung des zweiten Flächenspriegels 4 bezüglich des Heckscheibenrahmens 2 und bezüglich des ersten Flächenspriegels 5 und dadurch zunächst keine Relativbewegung des ersten Flächenspriegels 5 aus der zuvor geschlossenen Dachkontur heraus. Dies ist auch daran erkennbar, dass gemäß der Fig. 7 der vordere Arm 15 und der hintere Arm 14 des Antriebsgestänges 7 zu Beginn der Öffnungsbewegung keine Relativbewegung zueinander erfahren.

In Fig. 8 ist das Verdeck 1 mit der Verstelleinrichtung 17 in seinem vollständig geöffneten, d.h. in einem abgelegten Zustand gezeigt, in welchem die Verstelleinrichtung 17 ihre verkürzte Lage beibehält und in welchem die einzelnen Dachabschnitte 2, 4, 5 und 6 in gleicher Weise, wie bei Fig. 5 beschrieben, übereinander gestapelt sind.

Eine Schließbewegung des Verdecks 1 erfolgt dabei unabhängig von der gewählten Ausführungsform, d.h. unabhängig davon, ob eine aktive Verstelleinrichtung 17 vorgesehen ist oder nicht, in umgekehrter Weise, wobei zum Schluss der Schließbewegung der zweite Flächenspriegel 4 von unten in seine Endstellung verfahren wird, in welcher er zusammen mit den benachbarten Dachabschnitten 2 und 5 eine durchgehende Dachkontur bildet.

Selbstverständlich sind zwischen den einzelnen Dachabschnitten 2, 4, 5 und 6 nicht näher erläuterte Dichtungen vorgesehen, welche einen Innenraum des Cabriolets bei geschlossenem Verdeck 1 gegenüber äußeren Witterungseinflüsse abschirmen. Generell kann auch ein nicht gezeigter, flexibler Überzug vorgesehen sein, der zumindest Teile des Verdecks 1 überzieht und dadurch eine Abschirmung gegen äußere Witterungseinflüsse bewirkt. Ein derartige Überzug ist dabei jedoch nicht am zweiten Flächenspriegel 4 befestigt bzw. mit diesem verbunden, so dass beim Öffnen und Schließen des Verdecks 1 der zweite Flächenspriegel 4 unter den Heckscheibenrahmen 2 verstellt bzw. aus dieser Stellung wiederum hervorgeholt werden kann.

## Patentansprüche

1. Cabriolet mit einem zu öffnenden und ablegbaren Verdeck (1), das einen Heckscheibenrahmen (2) und bei geschlossenem Verdeck (1) zumindest einen in Fahrtrichtung (3) davor gelegenen Flächenspriegel (4) aufweist, wobei zwischen dem Heckscheibenrahmen (2) und dem Flächenspriegel (4) ein Kopplungsgestänge (8) zur Durchführung einer Relativbewegung des Flächenspriegels (4) bezüglich des Heckscheibenrahmens (2) angeordnet ist, das so ausgebildet ist, dass zu Beginn des Öffnens des Verdecks (1) der Flächenspriegel (4) relativ zum Heckscheibenrahmen (2) nach unten aus einer Dachkontur herausfahrbar ist, wobei zumindest zwei, in Fahrtrichtung (3) vor dem Heckscheibenrahmen (2) gelegene Flächenspriegel (4, 5) vorgesehen sind, nämlich ein erster Flächenspriegel (5) und ein, zwischen dem ersten Flächenspriegel (5) und dem Heckscheibenrahmen (2) angeordneter zweiter Flächenspriegel (4), die bei geschlossenem Verdeck (1) zusammen mit dem Heckscheibenrahmen (2) eine durchgehende Dachkontur bilden, und das Kopplungsgestänge (8) so ausgebildet ist, dass zu Beginn des Öffnens des Verdecks (1) der zweite Flächenspriegel (4) relativ zum benachbarten ersten Flächenspriegel (5) und relativ zum Heckscheibenrahmen (2) nach unten aus der Dachkontur herausfahrbar ist, **dadurch gekennzeichnet, dass** das Kopplungsgestänge (8) ein Viergelenk (9) mit zwei jeweils am zweiten Flächenspriegel (4) gelagerten Lenkern (10, 10') und ein, die beiden Lenker (10, 10') verbindendes Kopplungsglied (11) umfasst, und dass zur passiven Relativbewegung des zweiten Flächenspriegels (4) bezüglich des Heckscheibenrahmens (2) und des ersten Flächenspriegels (5) der hintere Lenker (10') des Viergelenks (9) mit einem am zweiten Flächenspriegel (4) angeordneten Gelenk (12) in einer am Heckscheibenrahmen (2) angeordneten Zwangsführung (13) verstellbar geführt ist.

2. Cabriolet nach Anspruch 1, **dadurch gekennzeichnet, dass** das Verdeck (1) in Fahrtrichtung (3) gesehen vor dem ersten Flächenspriegel (5) einen Integraldachrahmen (6) aufweist.

3. Cabriolet nach Anspruch 1 oder 2, **dadurch gekennzeichnet, dass** bei abgelegtem Verdeck (1) der zweite Flächenspriegel (4) unter dem Heckscheibenrahmen (2) und der erste Flächenspriegel (5) über dem Heckscheibenrahmen (2) abgelegt sind.

4. Cabriolet nach Anspruch 2 oder 3, **dadurch gekennzeichnet, dass** bei abgelegtem Verdeck (1) der Integraldachrahmen (6) über dem Heckscheibenrahmen (2) abgelegt ist.

5. Cabriolet nach Anspruch 1, **dadurch gekennzeichnet, dass** das Kopplungsglied (11) an seinem vorderen Ende gelenkig mit einem Antriebsgestänge (7) zum Öffnen und Schließen des Verdecks (1) verbunden ist.

## Claims

1. Convertible with a top (1) which can be opened and can be put away and which has a rear window frame (2) and, when the top (1) is closed, at least one surface bow (4) situated in front of said rear window frame in the direction of travel (3), a coupling linkage (8) for carrying out a relative movement of the surface bow (4) with respect to the rear window frame (2) being arranged between the rear window frame (2) and the surface bow (4) and being designed in such a manner that, at the beginning of the opening of the top (1), the surface bow (4) can be moved downward relative to the rear window frame (2) out of a roof contour, at least two surface bows (4, 5) which are situated in front of the rear window frame (2) in the direction of travel (3) being provided, namely a first surface bow (5) and a second surface bow (4) which is arranged between the first surface bow (5) and the rear window frame (2), which surface bows, when the top (1) is closed, forming a continuous roof contour together with the rear window frame (2), and the coupling linkage (8) being designed in such a manner that, at the beginning of the opening of the top (1), the second surface bow (4) can be moved downward relative to the adjacent first surface bow (5) and relative to the rear window frame (2) out of the roof contour, **characterized in that** the coupling linkage (8) comprises a four-bar linkage (9) with two links (10, 10') mounted in each case on the second surface bow (4), and a coupling member (11) connecting the two links (10, 10'), and **in that**, for the passive relative movement of the second surface bow (4) with respect to the rear window frame (2) and the first surface bow (5), the rear link (10') of the four-bar linkage (9) is guided displaceably in a positive guide mechanism (13), which is arranged on the rear window frame (2), by means of the joint (12) arranged on the second surface bow (4).

2. Convertible according to Claim 1, **characterized in that** the top (1) has an integral roof frame (6) in front of the first surface bow (5), as seen in the direction of travel (3).

3. Convertible according to Claim 1 or 2, **characterized in that**, when the top (1) is put away, the second surface bow (4) is put away below the rear window frame (2) and the first surface bow (5) is put away above the rear window frame (2).

4. Convertible according to Claim 2 or 3, **characterized in that**, when the top (1) is put away, the integral roof frame (6) is put away above the rear window frame (2).

5. Convertible according to Claim 1, **characterized in that** the coupling member (11) is connected at its front end in an articulated manner to a driving linkage (7) for opening and closing the top (1).

## Revendications

1. Cabriolet comprenant une capote (1) pouvant être ouverte et rangée, qui présente un encadrement de vitre arrière (2) et lorsque la capote (1) est fermée, au moins un étrier de surface (4) placé en avant de celui-ci dans la direction de conduite (3), une tringlerie d'accouplement (8) pour effectuer un mouvement relatif de l'étrier de surface (4) par rapport à l'encadrement de vitre arrière (2) étant disposée entre l'encadrement de vitre arrière (2) et l'étrier de surface (4), laquelle tringlerie d'accouplement est réalisée de telle sorte qu'au début de l'ouverture de la capote (1), l'étrier de surface (4) puisse être ressorti d'un contour de toit vers le bas par rapport à l'encadrement de vitre arrière (2), au moins deux étriers de surface (4, 5) situés dans la direction de conduite (3) en avant de l'encadrement de vitre arrière (2) étant prévus, à savoir un premier étrier de surface (5) et un deuxième étrier de surface (4) disposé entre le premier étrier de surface (5) et l'encadrement de vitre arrière (2), lesquels forment, lorsque la capote (1) est fermée, conjointement avec l'encadrement de vitre arrière (2), un contour de toit continu, et la tringlerie d'accouplement (8) étant réalisée de telle sorte qu'au début de l'ouverture de la capote (1), le deuxième étrier de surface (4) puisse être ressorti du contour de toit vers le bas par rapport au premier étrier de surface adjacent (5) et par rapport à l'encadrement de vitre arrière (2), **caractérisé en ce que** la tringlerie d'accouplement (8) comprend un quadrilatère articulé (9) avec deux bras oscillants (10, 10') montés chacun sur le deuxième étrier de surface (4) et un organe d'accouplement (11) reliant les deux bras oscillants (10, 10') et **en ce que** pour le mouvement relatif passif du deuxième étrier de surface (4) par rapport à l'encadrement de vitre arrière (2) et au premier étrier de surface (5), le bras oscillant arrière (10') du quadrilatère articulé (9) est guidé de manière réglable avec une articulation (12) disposée sur le deuxième étrier de surface (4) dans un guidage forcé (13) disposé sur l'encadrement de vitre arrière (2).

2. Cabriolet selon la revendication 1, **caractérisé en ce que** la capote (1), vue dans la direction d'avance (3) en avant du premier étrier de surface (5), présente un encadrement de toit intégral (6).

3. Cabriolet selon la revendication 1 ou 2, **caractérisé en ce que** lorsque la capote est rangée (1), le deuxième étrier de surface (4) est rangé sous l'encadrement de vitre arrière (2) et le premier étrier de surface (5) est rangé sur l'encadrement de vitre arrière (2).

4. Cabriolet selon la revendication 2 ou 3, **caractérisé en ce que** lorsque la capote (1) est rangée, l'encadrement de toit intégral (6) est rangé sur l'encadrement de vitre arrière (2).

5. Cabriolet selon la revendication 1, **caractérisé en ce que** l'organe d'accouplement (11) est raccordé au niveau de son extrémité avant de manière articulée à une tringlerie d'entraînement (7) pour l'ouverture et la fermeture de la capote (1).
